# EUROPÄISCHE PATENTSCHRIFT

(11) **EP 4 091 916 B1**
(45) Veröffentlichungstag und Bekanntmachung des Hinweises auf die Patenterteilung: **05.11.2025**
(21) Anmeldenummer: 21174562.5
(22) Anmeldetag: 19.05.2021
(51) Int. Cl.: B62D 25/04, B62D 25/14, B62D 29/00

(54) **STRUKTURBAUTEIL**
STRUCTURED COMPONENT
ÉLÉMENT DE STRUCTURE

(43) Veröffentlichungstag der Anmeldung: 23.11.2022
(73) Patentinhaber: GF Casting Solutions AG, 8201 Schaffhausen (CH)
(72) Erfinder: KOHLBRENNER, Fabian, 79862 Höchenschwand (DE); PHILIPP, Stephan, 78262 Gailingen (DE)
(74) Vertreter: Fenner, Seraina

(56) Entgegenhaltungen:
- EP-A2- 0 836 983
- DE-A1- 102008 062 007
- DE-A1- 102014 108 884

## Beschreibung

Die Erfindung betrifft ein Strukturbauteil eines Kraftfahrzeugs und ein Verfahren zur Herstellung, wobei sich das Strukturbauteil quer zur Fahrzeugrichtung erstreckt und dem Abtrennen zwischen Fahrgastraum und Frontraum vorzugsweise Motorraum dient, wobei das Strukturbauteil eine Spritzwand, zwei jeweils seitlich der Spritzwand angeordnete A-Säulen und eine entlang der Oberseite der Spritzwand verlaufende Querverstärkung aufweist.

Die DE 10 2008 062 007 A1 offenbart eine Schottwand, die mehrteilig ausgebildet ist, nämlich aus einem unteren Querträger, einem Schottwandelement und einem oberen Verstärkungsträger, wobei der untere Querträger als Leichtmetalldruckgussbauteil ausgebildet ist und das Schottwandelement wie auch der obere Verstärkungsträger aus einem Leichtmetallblech ausgebildet sind. Die Elemente werden bspw. durch Verschweissen, Verschrauben Verkleben oder auch Clinchen miteinander verbunden.

Nachteilig hier ist der hohe Aufwand des Verbindens der einzelnen Teile miteinander. Die DE 10 2008 062 004 A1 offenbart eine Karosseriestruktur bei der die Schottwand einen Flansch aufweist und mit dem Querträger der ebenfalls einen Flansch aufweist verbunden wird. Wobei die Schottwand aus einem Leichtmetallblech ausgebildet ist und mit dem Querträger vorzugsweise verschweisst oder verklebt ist. Auch hier besteht der Nachteil des hohen Zeitaufwands bei der Verbringung der einzelnen Elemente miteinander bevor das Karosseriestrukturteil in die Fahrzeugkarosserie eingebaut werden kann.

Die DE 10 2014 108 884 A4 und EP 0 836 983 A2 zeigen eine einstückige, vordere Scharniersäule eines Fahrzeugs und dessen Herstellungsverfahren.

Es ist Aufgabe der Erfindung ein Strukturbauteil und ein damit verbundenes Verfahren vorzuschlagen, das die Produktionszeit verkürzt, Logistikaufwendungen reduziert und möglichst wenige manuelle Arbeitsschritte benötigt, wodurch die Wirtschaftlichkeit des Teils erhöht werden soll wie auch, dass das Strukturbauteil ein möglichst geringes Gewicht aufweist.

Diese Aufgabe wird erfindungsgemäss dadurch gelöst, dass das Strukturbauteil als einteiliges bzw. einstückiges Leichtmetalldruckgussteil ausgebildet ist.

Das erfindungsgemässe Strukturbauteil eines Kraftfahrzeugs, wobei sich das Strukturbauteil quer zur Fahrzeugrichtung erstreckt und dem Abtrennen zwischen Fahrgastraum und Frontraum vorzugsweise Motorraum dient, beinhaltet eine Spritzwand, zwei jeweils seitlich der Spritzwand angeordnete A-Säulen und eine entlang der Oberseite der Spritzwand verlaufende Querverstärkung. Das erfindungsgemässe Strukturbauteil ist einteilig bzw. einstückig ausgebildet, das heisst, die Elemente wie Spritzwand, A-Säulen und auch Querverstärkung benötigen keine Fügeprozesse um mietender verbunden zu werden sondern das erfindungsgemässe Strukturbauteil ist als ein Ganzes ausgebildet. Das erfindungsgemässe Strukturbauteil ist zudem als Leichtmetalldruckgussteil ausgebildet, was einen dünnwandigen Aufbau erlaubt und trotzdem die gewünschte Stabilität erreicht.

Als vorteilhaft hat sich gezeigt, wenn die Spritzwand einen integral daran angeordneten Pedalträger aufweist. Unter integral daran angeordnet versteht sich, dass in der Spritzwand bzw. im Strukturbauteil direkt ein Pedalträger integriert ist und ebenfalls an dem erfindungsgemässen Druckgussbauteil angeordnet ist. Somit ist das erfindungsgemässe Strukturbauteil mit integriertem Pedalträger einteilig bzw. einstückig ausgebildet.

Selbstverständlich können auch weitere oder andere Laschen und Halterungen je nach Bedarf integral am erfindungsgemässen Strukturbauteil angeordnet sein bzw. dass weitere und andere Laschen und Halterungen in das Leichtmetalldruckgussbauteil mit integrierbar sind, je nach Fahrzeugtyp.

Vorzugsweise ist das Strukturbauteil dünnwandig ausgebildet, wobei die Bauteilwandung zwischen 1 und 8 mm liegt, vorzugsweise zwischen 2 und 5 mm. Vorzugsweise weisen die Bauteilwandungen unterschiedliche Dicken auf entsprechend ihrer Positionierung am Strukturbauteil. Durch die unterschiedlichen Dicken der Bauteilwandungen wird das Fliessverhalten im Strukturbauteil optimiert bzw. eine Fülloptimierung erreicht. Einerseits können die einzelnen Bauteilwandungen unterschiedliche Dicken aufweisen, entsprechen ihrer Anordnung, andererseits kann eine Bauteilwandung auch selbst unterschiedliche Dicken aufweisen, das heisst also sie kann sich verjüngen oder verbreitern um wie oben erwähnt eine Fülloptimierung zu erzielen.

Als eine bevorzugte Ausführungsform hat sich gezeigt, wenn die A-Säule zu ihrer Versteifung eine Verrippung aufweist. Vorzugsweise ist die Verrippung auf einer Seite einer A-Säule angeordnet und erstreckt sich über die ganze Breite und Höhe, oder nur über einen Teilbereich.

Als vorteilhaft hat sich gezeigt, wenn die Querverstärkung eine Verrippung als Versteifung aufweist. Die Verrippung ist vorzugsweise zwischen der Spritzwand und der Querverstärkung angeordnet. Wobei die Verrippung vorzugsweise durch eine regelmässige Anordnung von Rippen entlang der Oberseite der Spritzwand gebildet wird.

Vorzugsweise ist eine Verrippung im Übergangsbereich zwischen Spritzwand und A-Säule angeordnet. Diese Anordnung der Verrippung erhöht die Steifigkeit zwischen den einzelnen Bestandteilen des Strukturbauteils.

Gemäss einer bevorzugten Ausführungsform ist das erfindungsgemässe Strukturbauteil aus einer Al- oder Mg Legierung hergestellt.

Diese Aufgabe wird erfindungsgemäss dadurch gelöst, dass das erfindungsgemässe Strukturbauteil im Druckgussverfahren hergestellt wird.

Durch das Herstellen des erfindungsgemässen Strukturbauteils im Druckgussverfahren ist eine komplexe, dünnwandige und dennoch stabile Formgebung möglich. Zudem können diverse Anbauteile direkt in das einteilige Strukturbauteil integriert werden wodurch zusätzliche Montageschritte vermieden werden.

Als vorteilhaft hat sich gezeigt, wenn das erfindungsgemässe Strukturbauteil nach dem Vergiessen einer Wärmebehandlung unterzogen wird. Dadurch werden die gewünschten Eigenschaften wie beispielsweise die Festigkeit des Strukturbauteils noch erhöht. Eine Wärmebehandlung kann ganzteilig sowie auch nur partiell erfolgen.

Alle Ausgestaltungmöglichkeiten sind untereinander frei kombinierbar.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: eine dreidimensionale Ansicht eines erfindungsgemässen Strukturbauteils vom Fahrgastraum gesehen,

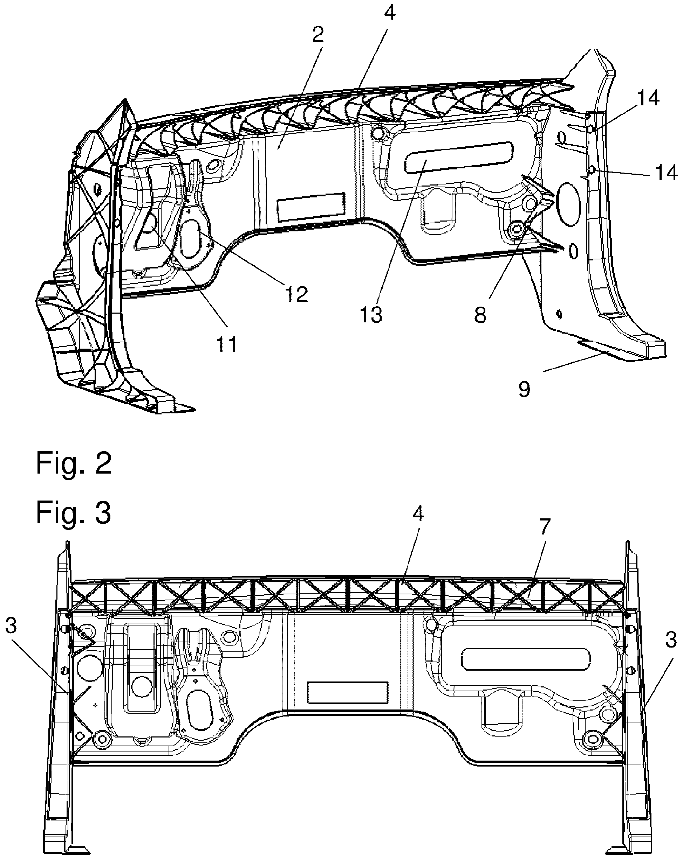

- Fig. 2: eine dreidimensionale Ansicht eines erfindungsgemässen Strukturbauteils vom Fahrgastraum gesehen,
- Fig. 3: eine Draufsicht eines erfindungsgemässen Strukturbauteils vom Fahrgastraum gesehen,

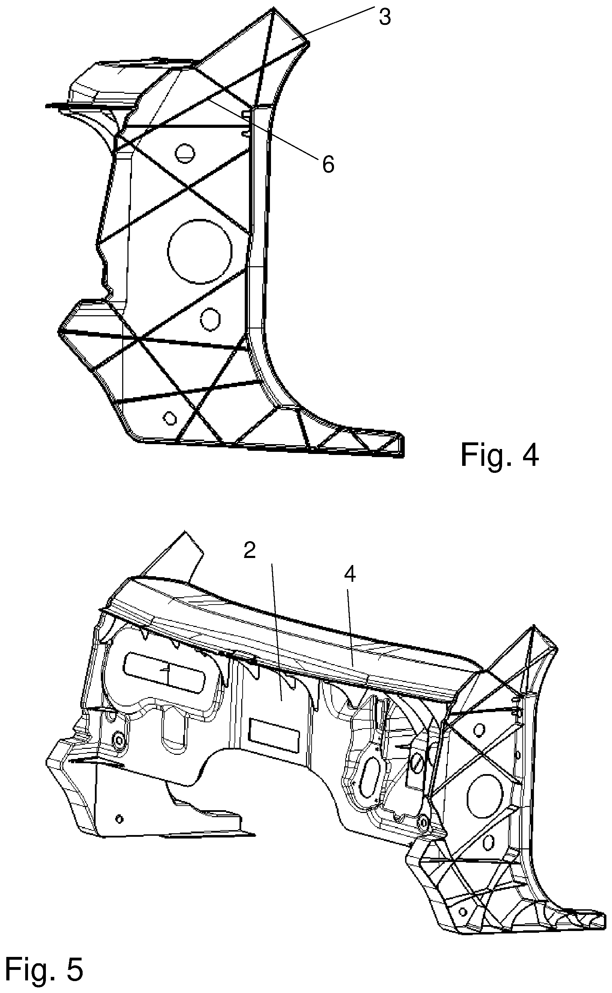

- Fig. 4: eine Seitenansicht auf eine A-Säule gerichtet,
- Fig. 5: eine dreidimensionale Ansicht eines erfindungsgemässen Strukturbauteils vom Frontraum gesehen und

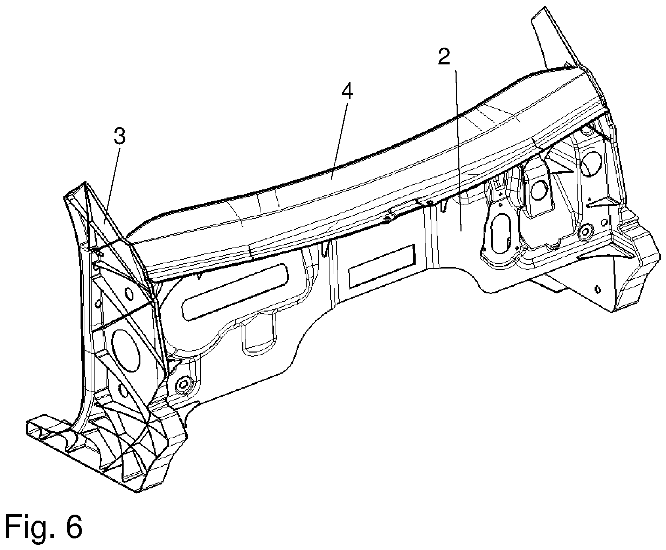

- Fig. 6: eine dreidimensionale Ansicht eines erfindungsgemässen Strukturbauteils vom Frontraum gesehen.

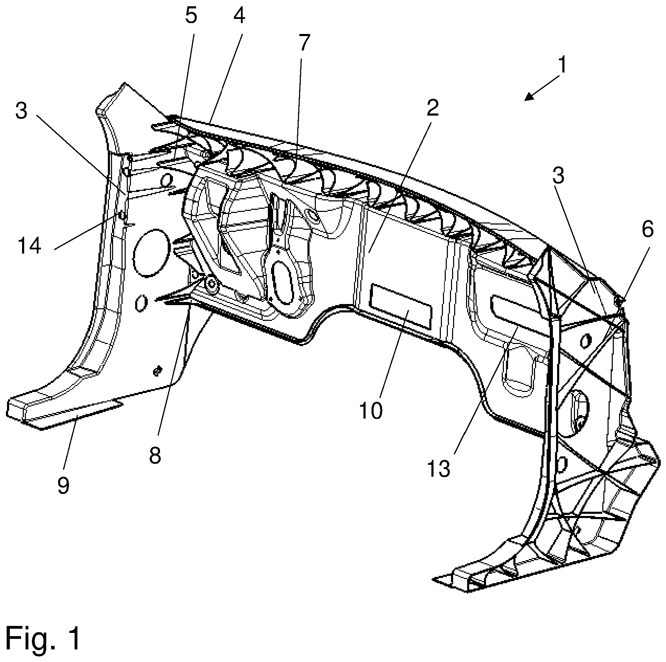

Die in Fig. 1 dargestellte Zeichnung zeigt ein erfindungsgemässes Strukturbauteil 1 für ein Kraftfahrzeug. Im verbauten Zustand erstreckt sich das Strukturbauteil quer zur Fahrzeugeinrichtung und trennt den Fahrgastraum und den Frontraum vorzugsweise den Motorraum voneinander. Das Strukturbauteil 1 beinhaltet eine Spritzwand 2 und jeweils seitlich daran angeformte A-Säulen 3. Die beiden sich gegenüberliegenden A-Säulen 3 sind vorzugsweise gespiegelt ausgebildet. Zudem beinhaltet das erfindungsgemässe Strukturbauteil 1 eine Querverstärkung 4, welche entlang der Oberseite der Spritzwand 2 verläuft. Das erfindungsgemässe Strukturbauteil 1 mit den beinhaltenden Elementen, A-Säulen 3, Spritzwand 2 und Querverstärkung 4 ist einteilig bzw. einstückig ausgebildet. Es weist also keine Fügestellen wie auch keine Verbindungselemente auf. Das erfindungsgemässe Strukturbauteil 1 ist als Leichtmetalldruckgussteil ausgebildet und kann dadurch in einem Arbeitsschritt hergestellt werden. Durch die Ausbildung als Druckgussbauteil ist ein dünnwandiger Aufbau möglich, welcher durch eine mögliche Verrippung die benötigte Stabilität bildet. Wie in den Figuren ersichtlich ist, ist es vorteilhaft wenn ein Pedalträger 4 ebenfalls direkt am Strukturbauteil 1 integriert ist bzw. auch dieses Element an der Spritzwand 2 angeformt ist, wodurch ein zusätzlicher Fügeprozess vermieden werden kann.

In den Figuren ist gut zu erkennen, dass es von Vorteil ist, wenn die A-Säule 3 eine Verrippung 6 aufweist, die die Stabilität erhöht. Vorzugsweise verläuft die Verripung 6 in der A-Säule 3 auf der Aussenseite. Zudem ist es zu bevorzugen, wenn sie in regelmässigen Abständen angeordnet ist.

Aus den Figuren ist ebenso zu erkennen, dass es von Vorteil ist, wenn eine Verrippung 7 zwischen der Querverstärkung 4 und der Oberseite der Spritzwand 2 angeordnet ist. Diese erhöht die Stabilität der Querverstärkung 4. Des Weiteren weist das erfindungsgemässe Strukturbauteil 1 vorzugsweise eine Verrippung 8 zwischen der Spritzwand 2 und der jeweiligen A-Säule 3 auf.

Zudem weist das erfindungsgemässe Strukturbauteil 1 vorzugsweise an den A-Säulen 3 eine Anbindung 9 zum Schweller auf.

Des Weiteren ist es von Vorteil, wenn die Spritzwand 2 einen integrierten Durchgang 10 für eine Verrohrung eines Klimagerätes aufweist. Als weiterer Vorteil hat sich gezeigt, wenn ebenfalls direkt in die Spritzwand 2 ein Durchgang 11, 12 für den Stössel des Bremspedals und /oder der Lenkstange besteht. Ebenso vorteilhaft ist es wenn in der Spritzwand 2 eine Serviceöffnung 13 für das Klimagerät integriert ist. Wie es auch von Vorteil ist, wenn Anbindungspunkte für einen Cockpitquerträger und/oder Dachholmen an der A-Säule 3 integriert sind.

### Bezugszeichenliste

- 1: Strukturbauteil
- 2: Spritzwand
- 3: A-Säule
- 4: Querverstärkung
- 5: Pedalträger
- 6: Verrippung A-Säule
- 7: Verrippung Querverstärkung
- 8: Verrippung A-Säule/Spritzwand
- 9: Anbindung Schweller
- 10: Durchgang Klima
- 11: Durchgang Stössel Bremspedal
- 12: Durchgang Lenkstange
- 13: Serviceöffnung Klimagerät
- 14: Anbindungspunkte

## Patentansprüche

1. Strukturbauteil (1) eines Kraftfahrzeugs, wobei sich das Strukturteil (1) quer zur Fahrzeugrichtung erstreckt und dem Abtrennen zwischen Fahrgastraum und Frontraum vorzugsweise Motorraum dient, wobei das Strukturbauteil eine Spritzwand (2), zwei jeweils seitlich der Spritzwand (2) angeordnete A-Säulen (3) und eine entlang der Oberseite der Spritzwand (2) verlaufende Querverstärkung (4) aufweist, **dadurch gekennzeichnet, dass** das Strukturbauteil als einteiliges bzw. einstückiges Leichtmetalldruckgussteil ausgebildet ist.

2. Strukturbauteil (1) nach Anspruch 1, **dadurch gekennzeichnet, dass** an der Spritzwand (2) einen integral daran angeordneten Pedalträger (5) aufweist.

3. Strukturbauteil (1) nach einem der Ansprüche 1 oder 2, **dadurch gekennzeichnet, dass** das Strukturbauteil (1) dünnwandig ausgebildet ist, wobei die Bauteilwandung zwischen 1 und 8 mm liegt, vorzugsweise zwischen 2 und 5 mm.

4. Strukturbauteil (1) nach einem der Ansprüche 1 bis 3, **dadurch gekennzeichnet, dass** die A-Säule (3) zu ihrer Versteifung eine Verrippung (6) aufweist.

5. Strukturbauteil (1) nach einem der Ansprüche 1 bis 4, **dadurch gekennzeichnet, dass** die Querverstärkung (4) eine Verrippung (7) zur Verstärkung aufweist.

6. Strukturbauteil (1) nach einem der Ansprüche 1 bis 5, **dadurch gekennzeichnet, dass** eine Verrippung (8) im Übergangsbereich zwischen Spritzwand (2) und A-Säule (3) angeordnet ist.

7. Strukturbauteil (1) nach einem der Ansprüche 1 bis 6, **dadurch gekennzeichnet, dass** das Strukturbauteil (1) aus einer Al- oder Mg-Legierung hergestellt ist.

8. Verfahren zur Herstellung eines Strukturbauteils (1) nach einem der Ansprüche 1 bis 7, **dadurch gekennzeichnet, dass** das Strukturbauteil (1) im Druckgussverfahren hergestellt wird.

9. Verfahren nach Anspruch 8, **dadurch gekennzeichnet, dass** das Strukturbauteil (1) nach dem Vergiessen einer Wärmebehandlung unterzogen wird.

## Claims

1. Structural component (1) of a motor vehicle, wherein the structural component (1) extends transversely to the vehicle direction and serves to separate the passenger compartment and the front compartment, preferably the engine compartment, wherein the structural component has a bulkhead (2), two A-pillars (3) arranged in each case laterally with respect to the bulkhead (2), and a transverse reinforcement (4) extending along the top side of the bulkhead (2), **characterized in that** the structural component is formed as a one-part or one-piece lightweight-metal die-cast part.

2. Structural component (1) according to Claim 1, **characterized in that** on the bulkhead (2) has a pedal carrier (5) which is arranged integrally thereon.

3. Structural component (1) according to either of Claims 1 and 2, **characterized in that** the structural component (1) is of thin-walled form, wherein the component wall is between 1 and 8 mm, preferably between 2 and 5 mm.

4. Structural component (1) according to one of Claims 1 to 3, **characterized in that** the A-pillar (3) has a rib formation (6) for the stiffening thereof.

5. Structural component (1) according to one of Claims 1 to 4, **characterized in that** the transverse reinforcement (4) has a rib formation (7) for reinforcement.

6. Structural component (1) according to one of Claims 1 to 5, **characterized in that** a rib formation (8) is arranged in the transition region between bulkhead (2) and A-pillar (3).

7. Structural component (1) according to one of Claims 1 to 6, **characterized in that** the structural component (1) is produced from an Al or Mg alloy.

8. Method for producing a structural component (1) according to one of Claims 1 to 7, **characterized in that** the structural component (1) is produced in a die-casting process.

9. Method according to Claim 8, **characterized in that** the structural component (1) is subjected to heat treatment after casting.

## Revendications

1. Composant structurel (1) d'un véhicule automobile, le composant structurel (1) s'étendant transversalement à la direction du véhicule et servant à séparer l'habitacle et l'espace avant, de préférence le compartiment moteur, le composant structurel présentant une cloison pare-feu (2), deux montants A (3) agencés chacun sur un côté de la cloison pare-feu (2) et un renfort transversal (4) s'étendant le long du côté supérieur de la cloison pare-feu (2), **caractérisé en ce que** le composant structurel est réalisé sous forme de pièce moulée sous pression en métal léger monobloc ou d'un seul tenant.

2. Composant structurel (1) selon la revendication 1, **caractérisé en ce que** sur le cloison pare-feu (2) présente un support de pédale (5) qui y est agencé de manière intégrée.

3. Composant structurel (1) selon l'une quelconque des revendications 1 ou 2, **caractérisé en ce que** le composant structurel (1) est réalisé avec une paroi mince, la paroi du composant se situant entre 1 et 8 mm, de préférence entre 2 et 5 mm.

4. Composant structurel (1) selon l'une quelconque des revendications 1 à 3, **caractérisé en ce que** le montant A (3) présente un nervurage (6) pour sa rigidification.

5. Composant structurel (1) selon l'une quelconque des revendications 1 à 4, **caractérisé en ce que** le renfort transversal (4) présente un nervurage (7) pour son renforcement.

6. Composant structurel (1) selon l'une quelconque des revendications 1 à 5, **caractérisé en ce qu'**un nervurage (8) est agencé dans la zone de transition entre la cloison pare-feu (2) et le montant A (3).

7. Composant structurel (1) selon l'une quelconque des revendications 1 à 6, **caractérisé en ce que** le composant structurel (1) est fabriqué à partir d'un alliage d'Al ou de Mg.

8. Procédé de fabrication d'un composant structurel (1) selon l'une quelconque des revendications 1 à 7, **caractérisé en ce que** le composant structurel (1) est fabriqué par le procédé de moulage sous pression.

9. Procédé selon la revendication 8, **caractérisé en ce que** le composant structurel (1) est soumis à un traitement thermique après le moulage.
